# EUROPEAN PATENT SPECIFICATION

(11) **EP 1 584 469 B1**
(45) Date of publication and mention of the grant of the patent: **12.03.2008**
(21) Application number: 04008262.0
(22) Date of filing: 05.04.2004
(51) Int. Cl.: B32B 37/15, D06N 3/14

(54) **Method for forming laminated synthetic leather**
Verfahren zur Herstellung von laminiertem Kunstleder
Procédé de formation de cuir synthétique laminé

(43) Date of publication of application: 12.10.2005
(73) Proprietor: Wang, Swei Mu, Taichung City 407 (TW)
(72) Inventor: Wang, Swei Mu, Taichung City 407 (TW)
(74) Representative: Viering, Jentschura & Partner

(56) References cited:
- EP-A- 1 287 909
- DD-A- 298 578

## Description

### 1. Field of the Invention

The present invention relates to a method according to the preamble of claim 1.

### 2. Description of the Prior Art

Typically, for manufacturing or forming laminated synthetic leathers, a soft or melted coating is heated or melted or extruded from an extruder machine into a film, and then pressed onto a textile carrier with rollers, in order to solidly secure the film of the soft or melted coating onto the textile carrier.

For example, German Patent No. DD 298578-A7 to Braun et al. discloses a method of the initially-mentioned type.

For allowing the soft PVC coating or film to be solidly attached or secured onto the textile carrier, in the compression region between the film of the soft or melted coating and the textile carrier, the PVC film is not initially cooled so much that it loses its thermoplastic workability, and the textile carrier is heated so that the PVC film applied penetrates into the textile carrier to a greater extent.

However, on subsequent cooling, the PVC film loses its workability and flexibility, such that a great portion of the textile carrier will also lose its workability and flexibility, and such that the users may not feel soft or flexible or comfortable when wearing a cloth manufactured with such laminated synthetic leathers.

In EP 1287909 A2 there is disclosed a method for producing a thermoplastic coating and articles constructed therefrom. There is provided a nip roller and another roller, where a film is supplied from a coating device and is applied on the nip roller, where the substrate is supplied by the other roller, and where the nip roller and the other roller form a roller clearance, to compress the film together with the substrate. Furthermore, the distance of the coating device relative to the point, where the film is applied to, may be varied to achieve a corresponding cooling of the film.

The present invention has arisen to mitigate and/or obviate the afore-described disadvantages of the conventional methods for manufacturing or forming laminated synthetic leathers.

### SUMMARY OF THE INVENTION

The primary objective of the present invention is to provide a method for manufacturing or forming laminated synthetic leather and for preventing the soft film or coating from penetrating into the textile carrier to a greater extent, and thus for forming a soft or flexible laminated synthetic leather.
This is achieved by a method including the features as claimed in claim 1. Further embodiments of the invention are described in the dependent claims.

### BRIEF DESCRIPTION OF THE DRAWINGS

FIG. 1 is a plan schematic view illustrating a method for manufacturing or forming laminated synthetic leather in accordance with the present invention;
FIG. 2 is a plan schematic view illustrating a lamination roller for carrying and cooling a soft film or coating before compression;
FIG. 3 is a cross sectional view showing a laminated synthetic leather to be made with the method for manufacturing or forming laminated synthetic leather in accordance with the present invention;
FIG. 4 is a plan schematic view similar to FIG. 1, illustrating the other arrangement for conduction the method for manufacturing or forming laminated synthetic leather;
FIG. 5 is a plan schematic view similar to FIGS. 1 and 4, illustrating another arrangement for conduction the method for manufacturing or forming laminated synthetic leather;
FIG. 6 is a plan schematic view similar to FIGS. 1 and 4-5, illustrating a further arrangement for conduction the method for manufacturing or forming laminated synthetic leather; and
FIG. 7 is a plan schematic view similar to FIGS. 1 and 4-6, illustrating a still further arrangement for conduction the method for manufacturing or forming laminated synthetic leather.

### DETAILED DESCRIPTION OF THE PREFERRED EMBODIMENT

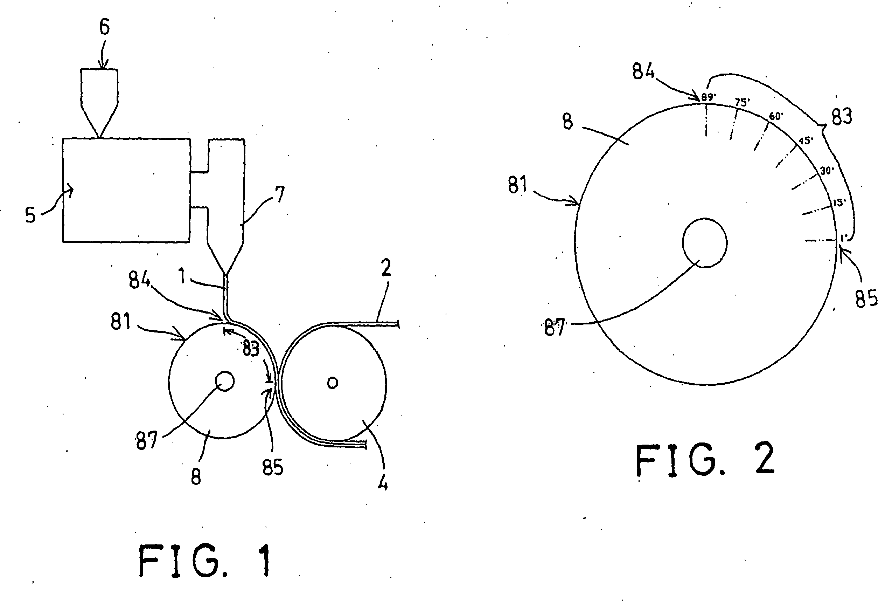

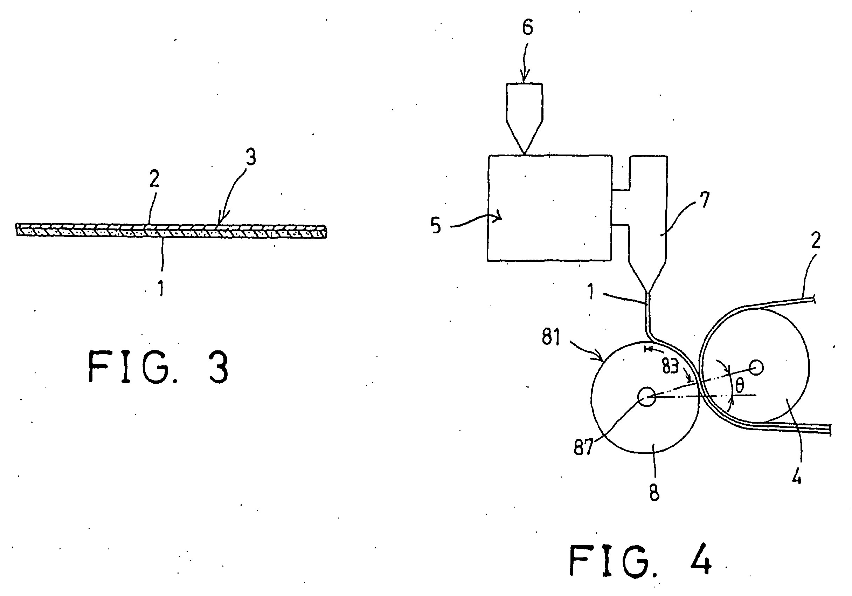

Referring to the drawings, and initially to FIGS. 1-3, a method in accordance with the present invention is provided for attaching or compressing a soft film or coating 1 and a textile carrier 2 together, to form a laminated synthetic leather 3 (FIG. 3), and to prevent the soft film or coating 1 from penetrating into the textile carrier 2 to a greater extent, and thus for forming a soft or flexible laminated synthetic leather 3. A carrying roller 4 is provided to carry the textile carrier 2, and may be made of metal, plastic, rubber or other materials.

An extruder machine 5 is provided to form the soft film or coating 1, and includes an inlet 6 for receiving the materials for forming the soft film or coating 1, and includes a port 7 for outlet the materials that have been heated or melted by the extruder machine 5, to form the soft film or coating 1.

For example, the materials for forming the soft film or coating 1 may be selected from thermoplastic polymers, such as thermoplastic urethane (TPU) + styrene butadiene rubber (SBR); thermoplastic urethane (TPU) + styrene ethylene butylenes styrene block copolymer (SEBS); thermoplastic urethane (TPU) + thermoplastic rubber (TPR); thermoplastic urethane (TPU) + ethylene propylene diene monomer rubber (EPDM); or the like.

The inclusion or the introducing of the other materials, such as styrene butadiene rubber (SBR), styrene ethylene butylenes styrene block copolymer (SEBS), thermoplastic rubber (TPR), ethylene propylene diene monomer rubber (EPDM) into the thermoplastic urethane (TPU) is provided to change the characteristics of the thermoplastic urethane (TPU), in order to form the soft film or coating 1 having a porous structure or having a number of perforations formed therein. A foamable agent may further be added or introduced into the materials for forming the soft film or coating 1, in order to increase the softness or the flexibility of the film or coating 1.

A lamination roller 8 is further provided and disposed close to the carrying roller 4, and includes an outer peripheral portion 81 to support and to carry the soft film or coating 1, and is preferably made of heat conductive materials, such as metal, for contacting with the heated or melted soft film or coating 1. A segment 83 of the outer peripheral portion 81 of the lamination roller 8 is contacted with the heated or melted soft film or coating 1, to suitably dissipate the heat of the heated or melted soft film or coating 1.

For example, as shown in FIGS. 1 and 2, it is preferably that the heated or melted soft film or coating 1 is flowing or feeding downwardly out of or from the port 7 of the extruder machine 5, to engage with a top point or an end 84 of the segment 83 that is designed with 89° of the lamination roller 8, and engaged with the segment 83 of the outer peripheral portion 81 of the lamination roller 8, and then leaving at a lateral point or another end 85 of the segment 83 that is designed with 1° of the lamination roller 8.

In addition to suitably cooling the heated or melted soft film or coating 1, the lamination roller 8 may also be used to suitably support the heated or melted soft film or coating 1, to allow the heated or melted soft film or coating 1 to have a uniformly distributed thickness, or to prevent the heated or melted soft film or coating 1 from having a changing thickness.

The lamination roller 8 preferably includes a passage 87 formed or provided therein for receiving cooling water or fluid therethrough, and for allowing the lamination roller 8 and thus the heated or melted soft film or coating 1 to be suitably cooled by the cooling water or fluid flowing through the passage 87 of the lamination roller 8.

It is to be noted that the flowing speed of the cooling water or fluid flowing through the passage 87 of the lamination roller 8 may be controlled to determine the temperature of the heated or melted soft film or coating 1, for allowing the heated or melted soft film or coating 1 to be suitably pressed onto the textile carrier 2. The rotational speed of the lamination roller 8 may also be controlled to change the supporting time of the film 1 on the roller 8 and to determine the temperature of the heated or melted soft film or coating 1.

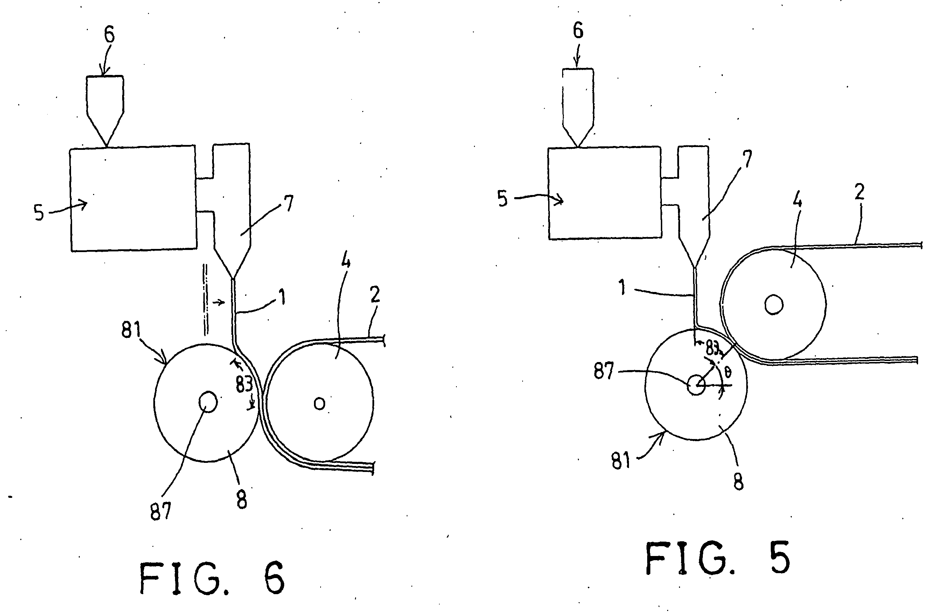

As shown in FIG. 1, the rollers 4, 8 may be disposed side by side, to allow the heated or melted soft film or coating 1 to be carried on all of the segment 83 of the outer peripheral portion 81 of the lamination roller 8. Alternatively, as shown in FIGS. 4 and 5, the carrying roller 4 may also be disposed or arranged in different angular position relative to the lamination roller 8, to change the engaging portion of the heated or melted soft film or coating 1 with the segment 83 of the outer peripheral portion 81 of the lamination roller 8.

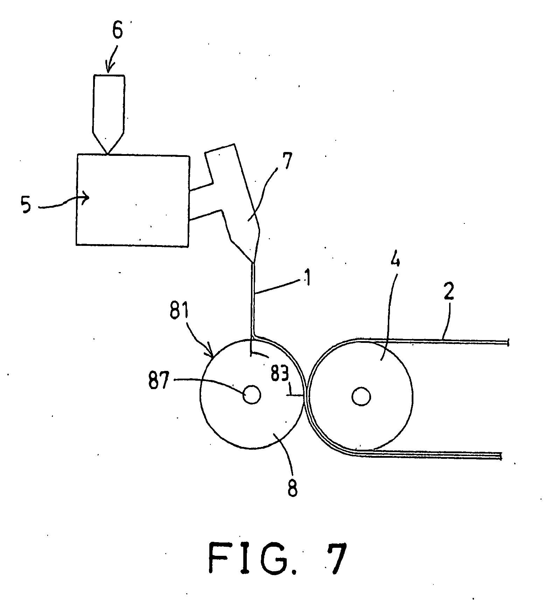

Further alternatively, as shown in FIG. 6, the port 7 of the extruder machine 5 may also be changed to different position relative to the lamination roller 8, to change the engaging portion of the downwardly fed film or coating 1 with the segment 83 of the outer peripheral portion 81 of the lamination roller 8. As shown in FIG. 7, the port 7 of the extruder machine 5 may also be changed to different angular position relative to the lamination roller 8, to suitably supply the film or coating 1 toward the lamination roller 8.

After the heated or melted soft film or coating 1 has been suitably cooled to the required temperature by the lamination roller 8 and/or the cooling water or fluid, the film 1 and the textile carrier 2 may be compressed together by the rollers 4, 8, in order to form the laminated synthetic leather 3 (FIG. 3). In addition, the suitably cooled film 1 may be prevented from completely or fully penetrated into the textile carrier 2 to a greater extent.

For example, the film 1 may be penetrated into the textile carrier 2 to an extent of about 3-45 vol.%, for allowing the laminated synthetic leather 3 to have a suitable softness or flexibility. The outer peripheral portion 81 of the lamination roller 8 may be formed into a smooth outer surface or may be formed or knurled with various patterns to have the patterns to be transferred or formed on the laminated synthetic leather 3.

Accordingly, the method in accordance with the present invention may be used for preventing the soft film or coating from penetrating into the textile carrier to a greater extent, and thus for forming a soft or flexible laminated synthetic leather.

Although this invention has been described with a certain degree of particularity, it is to be understood that the present disclosure has been made by way of example only and that numerous changes in the detailed construction and the combination and arrangement of parts may be resorted to without departing from the scope of the invention as hereinafter claimed.

## Claims

1. A method for manufacturing or forming a laminated synthetic leather (3), said method comprising:
providing a carrying roller (4);
engaging a textile carrier (2) onto said carrying roller (4);
providing and disposing a lamination roller (8) close to said carrying roller (4);
providing an extruder machine (5) tao extrude a material into a film (1) and to feed the film (1) via a port (7); and
compressing said film (1) and said textile carrier (2) together with said carrying roller (4) and said lamination roller (8), to form said laminated synthetic leather (3),
**characterized by**
downwardly feeding said film (1) onto said lamination roller (8), to have said film (1) carried on a portion of an outer peripheral portion (81) of said lamination roller (8); and by either
controlling the rotational speed of the lamination roller (8) for changing the suppporting time of the film (1) on the lamination roller (8), or
disposing or arranging the carrying roller (4) in different angular position relative to the lamination roller (8) for changing the engaging portion of the film (1) with the outer peripheral portion (81) of the lamination roller (8), or
changing the position of the port (7) of said extruder machine (5) relative to said lamination roller (8) for changing the engaging portion of the film (1) with the outer peripheral portion (81) of the lamination roller (8), or
changing the angular position of the port (7) of the extruder machine (5) relative to said lamination roller (8) for changing the.engaging portion of the film (1) with the outer peripheral portion (81) of lamination roller (8),
to thereby have said film (1) suitably cooled by said lamination roller (8) to prevent said film (1) from being completely penetrated into said textile carrier (2).

2. The method as claimed in claim 1 further comprising cooling said lamination roller (8), to suitably cool said film (1).

3. The method as claimed in claim 2 further comprising providing a passage (87) in said lamination roller (8), and feeding a cooling fluid through said passage (87) of said lamination roller (8), to suitably cool said film (1).

4. The method as claimed in claim 1 further comprising introducing a foamable agent into said material for forming said film (1), and for increasing a softness of said film (1).

5. The method as claimed in claim 1 further comprising forming said film (1) into a porous structure having a plurality of perforations formed therein.

6. The method as claimed in claim 1, wherein said material is selected from thermoplastic polymers.

7. The method as claimed in claim 1, wherein said thermoplastic polymers materials are thermoplastic urethane (TPU) + styrene butadiene rubber (SBR).

8. The method as claimed in claim 1, wherein said thermoplastic polymers materials are thermoplastic urethane (TPU) + styrene ethylene butylenes styrene block copolymer (SEBS).

9. The method as claimed in claim 1, wherein said thermoplastic polymers materials are thermoplastic urethane (TPU) + thermoplastic rubber (TPR).

10. The method as claimed in claim 1, wherein said thermoplastic polymers materials are thermoplastic urethane (TPU) + ethylene propylene diene monomer rubber (EPDM).

## Patentansprüche

1. Verfahren zur Herstellung oder Ausbildung eines laminierten Kunstleders (3), wobei das Verfahren umfasst:
Bereitstellen einer Tragwalze (4);
in Eingriff bringen eines textilen Trägers (2) auf der Tragwalze (4);
Bereitstellen und Anordnen einer Laminierwalze (8) in Nähe der Tragwalze (4);
Bereitstellen eines Extruders (5), um ein Material in einen Film (1) zu extrudieren und den Film (1) durch eine Öffnung (7) zuzuführen; und
Zusammendrücken des Films (1) und des textilen Trägers (2) mit Hilfe der Tragwalze (4) und der Laminierwalze (8), um das laminierte Kunstleder (3) auszubilden,
**gekennzeichnet durch**
nach unten Fördern des Films (1) auf die Laminierwalze (8), um den Film (1) auf einem Teil eines Außenumfangsabschnitts (81) der Laminierwalze (8) tragen zu lassen;
und entweder **durch**
Steuern der Drehzahl der Laminierwalze (8) zum Ändern der Tragzeit des Films (1) auf der Laminierwalze (8), oder
Anordnen oder Ausrichten der Tragwalze (4) in unterschiedlicher Winkelposition relativ zur Laminierwalze (8) zum Ändern des Eingriffabschnitts des Films (1) mit dem Außenumfangsabschnitts (81) der Laminierwalze (8), oder
Ändern der Position der Öffnung (7) des Extruders (5) relativ zur Laminierwalze (8) zum Ändern des Eingriffabschnitts des Films (1) mit dem Außenumfangsabschnitts (81) der Laminierwalze (8), oder
Ändern der Winkelposition der Öffnung (7) des Extruders (5) relativ zur Laminierwalze (8) zum Ändern des Eingriffabschnitts des Films (1) mit dem Außenumfangsabschnitt (81) der Laminierwalze (8),
um **dadurch** den Film (1) ausreichend **durch** die Laminierwalze (8) kühlen zu lassen, um zu verhindern, dass der Film (1) vollständig in den textilen Träger (2) penetriert wird.

2. Verfahren nach Anspruch 1, ferner umfassend Kühlen der Laminierwalze (8), um den Film (1) geeignet zu kühlen.

3. Verfahren nach Anspruch 2, ferner umfassend Bereitstellen eines Durchlasses (87) in der Laminierwalze (8) und Zuführen einer Kühlflüssigkeit durch den Durchlass (87) der Laminierwalze (8), um den Film (1) geeignet zu kühlen.

4. Verfahren nach Anspruch 1, ferner umfassend Einbringen eines schäumbaren Mittels in das Material zum Ausbilden des Films (1) und zum Erhöhen der Weichheit des Films (1).

5. Verfahren nach Anspruch 1, ferner umfassend Ausbilden des Films (1) als eine poröse Struktur mit einer Vielzahl von darin ausgebildeten Perforationen.

6. Verfahren nach Anspruch 1, wobei das Material aus thermoplastischen Polymeren ausgewählt ist.

7. Verfahren nach Anspruch 1, wobei die thermoplastischen Polymermaterialien thermoplastisches Urethan (TPU) + Styren-Butadien-Kautschuk (SBR) sind.

8. Verfahren nach Anspruch 1, wobei die thermoplastischen Polymermaterialien thermoplastisches Urethan (TPU) + Styren-Ethylen-Butylen-Styren-Blockcopolymer (SEBS) sind.

9. Verfahren nach Anspruch 1, wobei die thermoplastischen Polymermaterialien thermoplastisches Urethan (TPU) + thermoplastischer Kautschuk (TPR) sind.

10. Verfahren nach Anspruch 1, wobei die thermoplastischen Polymermaterialien thermoplastisches Urethan (TPU) + Ethylen-Propylen-Dien-Monomer-Kautschuk (EPDM) sind.

## Revendications

1. Procédé de fabrication ou de production d'un cuir synthétique stratifié (3), ledit procédé comprenant :
le fait de prendre un rouleau support (4);
l'engagement d'un support textile (2) sur ledit rouleau support (4);
le fait de prendre et de disposer un rouleau de stratification (8) à proximité dudit rouleau support (4) ;
le fait de prendre une machine extrudeuse (5) en vue d'extruder un matériau sous forme de film (1) et d'introduire le film (1) par un orifice (7) ;
et le fait de comprimer ledit film (1) et ledit support textile (2) ensemble avec ledit rouleau support (4) et avec ledit rouleau de stratification (8), afin de former ledit cuir synthétique stratifié (3), **caractérisé par**
l'introduction dudit film (1) vers le bas sur ledit rouleau de stratification (8), pour que ledit film (1) soit porté sur une partie d'une partie périphérique extérieure (81) dudit rouleau de stratification (8) ; et par
soit la régulation de la vitesse de rotation du rouleau de stratification (8) afin de modifier la durée de soutien du film (1) sur le rouleau de stratification (8)
soit le placement ou l'agencement du rouleau support (4) en position angulaire différente par rapport au rouleau de stratification (8) afin de modifier la partie d'engagement du film (1) avec la partie périphérique extérieure (81) du rouleau de stratification (8),
soit la modification de la position de l'orifice (7) de ladite machine extrudeuse (5) par rapport audit rouleau de stratification (8) afin de modifier la partie d'engagement du film (1) avec la partie périphérique extérieure (81) du rouleau de stratification (8),
soit la modification de la position angulaire de l'orifice (7) de la machine extrudeuse (5) par rapport audit rouleau de stratification (8) afin de modifier la partie d'engagement du film (1) avec la partie périphérique extérieure (81) du rouleau de stratification (8),
afin que ledit film (1) soit ainsi refroidi de manière appropriée par ledit rouleau de stratification (8) afin d'empêcher ledit film (1) de pénétrer complètement dans ledit support textile (2).

2. Procédé selon la revendication 1, comprenant en outre le refroidissement dudit rouleau de stratification (8), afin de refroidir de manière appropriée ledit film (1).

3. Procédé selon la revendication 2, comprenant en outre le fait de prévoir un passage (87) dans ledit rouleau de stratification (8), et l'introduction d'un fluide réfrigérant à travers ledit passage (87) dudit rouleau de stratification (8), afin de refroidir de manière appropriée ledit film (1).

4. Procédé selon la revendication 1, comprenant en outre l'introduction d'un agent de moussage dans ledit matériau afin de produire ledit film (1), et d'accroître une mollesse dudit film (1).

5. Procédé selon la revendication 1, comprenant en outre le fait de produire ledit film (1) sous forme d'une structure poreuse comportant une pluralité de perforations qui y sont formées.

6. Procédé selon la revendication 1, dans lequel ledit matériau est choisi parmi des polymères thermoplastiques.

7. Procédé selon la revendication 1, dans lequel lesdits matériaux polymères thermoplastiques sont de l'uréthane thermoplastique (TPU, *thermoplastic urethane*) + du caoutchouc styrène butadiène (SBR, *styrene butadiene rubber*).

8. Procédé selon la revendication 1, dans lequel lesdits matériaux polymères thermoplastiques sont de l'uréthane thermoplastique (TPU) + un copolymère séquencé de styrène, d'éthylène, de butylène et de styrène (SEBS).

9. Procédé selon la revendication 1, dans lequel lesdits matériaux polymères thermoplastiques sont de l'uréthane thermoplastique (TPU) + du caoutchouc thermoplastique (TPR, *thermoplastic rubber*).

10. Procédé selon la revendication 1, dans lequel lesdits matériaux polymères thermoplastiques sont de l'uréthane thermoplastique (TPU) + du caoutchouc monomère éthylène propylène diène (EPDM, *ethylene propylene diene monomer rubber*).
